# EUROPÄISCHE PATENTANMELDUNG

(11) **EP 4 173 470 A1**
(43) Veröffentlichungstag der Anmeldung: **03.05.2023**
(21) Anmeldenummer: 22200451.7
(22) Anmeldetag: 10.10.2022
(51) Int. Cl.: A01F 15/08

(54) **VORRICHTUNG ZUM JUSTIEREN EINES KETTENRADES EINES KETTENTRIEBS**

(30) Priorität: 29.10.2021 DE 102021128386; 29.10.2021 DE 102021128389
(71) Anmelder: Deere & Company, Moline, IL 61265 (US)
(72) Erfinder: ZABE, MICKAEL, 68163 Mannheim (DE)
(74) Vertreter: Stein, Stefan

(57) **Zusammenfassung**

Es wird eine Vorrichtung (70) zum Justieren eines Kettenrades (58, 60, 62, 64, 66, 68) eines Kettentriebs (40, 44, 48) vorgeschlagen. Die Vorrichtung (70) umfasst einen Lagerzapfen (72), der ein freies Ende (76) und ein festes Ende (78) umfasst, einen auf dem Lagerzapfen (72) angeordnetes Rotationslager (74) und ein auf dem Rotationslager (74) geführtes Kettenrad (58, 60, 62, 64, 66, 68). Der Lagerzapfen (72) weist einen ersten Außengewindebereich (82) und einen zweiten Außengewindebereich (84) auf, wobei auf den Außengewindebereichen (82, 84) jeweils eine Gewindemutter (86, 88) angeordnet ist, mittels denen das Rotationslager (74) auf dem Lagerzapfen (72) zwischen den Außengewindebereichen (82, 84) eingespannt ist. Ferner wird ein Kettentrieb (40, 44, 48) zum Antreiben von Presswalzen (24, 26) oder Pressriemen einer Rundballenpresse (10) zum Pressen von Erntegut, mit wenigstens einer derartigen Vorrichtung (70) und eine Rundballenpresse mit einem solchen Kettentrieb (40, 44, 48) vorgeschlagen.

## Beschreibung

Die Erfindung betrifft eine Vorrichtung zum Justieren eines Kettenrades eines Kettentriebs, insbesondere eines Kettentriebs zum Antreiben von Presswalzen oder Pressriemen einer Rundballenpresse zum Pressen von Erntegut. Die Vorrichtung umfasst einen Lagerzapfen, mit einem freien Ende und einem festen Ende, ein auf dem Lagerzapfen angeordnetes Rotationslager und ein auf dem Rotationslager geführtes Kettenrad.

Im Stand der Technik sind eine Vielzahl von Rundballenpressen bekannt, wobei zwischen Rundballenpressen mit fester und Rundballenpressen mit variabler Presskammer unterschieden wird. Rundballenpressen mit fester Presskammer zeichnen sich dadurch aus, dass über den Umfang einer definierten zylindrischen Presskammer eine Mehrzahl von Presswalzen angeordnet sind, die den Pressraum in Umfangsrichtung begrenzen. An den Stirnseiten wird der zylindrische Pressraum durch jeweilige Seitenwände begrenzt. Rundballenpressen mit variabler Presskammer zeichnen sich hingegen dadurch aus, dass der zylindrischer Pressraum durch einen oder mehrere Pressriemen in Umfangsrichtung begrenzt wird, wobei der Pressriemen über mehrere Walzen geführt wird. Durch Lageveränderung einer oder mehrerer Walzen während des Pressvorgangs gestaltet sich der Umfang des Pressraumes variabel. An den Stirnseiten wird der zylindrische Pressraum ebenfalls durch jeweilige Seitenwände begrenzt. Ferner ist es bekannt, sowohl die Presswalzen einer Rundballenpresse mit fester Presskammer, als auch die Walzen einer Rundballenpresse mit variabler Presskammer über einen Kettentrieb anzutreiben bzw. in Rotation zu bringen. Derartige Kettentriebe sind an einem Rahmen der Rundballenpresse an einer oder beiden Seitenwänden außerhalb des Pressraums angeordnet. Der Kettentrieb umfasst dabei mehrere Zahnräder bzw. Kettenräder, die mit den Presswalzen bzw. Walzen verbunden sind, wobei die Kettenräder über eine oder mehrere Antriebsketten in Antriebsverbindung stehen.

Eine derartige Rundballenpresse ist beispielsweise aus DE 196 32 762 A1 bekannt. Darin wird, eine Antriebsvorrichtung für die eine Presskammer umgrenzenden Presswalzen einer Rundballenpresse gezeigt, wobei mehrere Kettentriebe vorgesehen sind. Die einzelnen Kettentriebe dienen jeweils zum Antrieb einer Teilanzahl der insgesamt anzutreibenden Presswalzen, wobei Antriebskettenräder zum Antrieb der einzelner Kettentriebe gemeinsam antreibbar sind. Die zum Antreiben der Presswalzen bestimmten Kettenräder sind auf einem Kreisbogen in einem seitlichen Gehäuseteil der Rundballenpresse angeordnet und die Kettentriebe sind parallel zueinander angebracht.

Eine weitere Rundballenpresse aus dem Stand der Technik zeigt EP 2 952 089 A1, bei der mehrere Presswalzen um eine Presskammer herum angeordnet sind und durch einen Kettentrieb mit einer gemeinsamen Kette angetriebene Kettenräder tragen. Wenigstens eines der Kettenräder und die dazugehörige Presswalze weisen zusammenwirkende Führungsmittel, in Form einer Wellenaußenverzahnung an der Presswalze und einer damit zusammenwirkenden Nabeninnenverzahnung am Kettenrad, auf, die das Kettenrad und die Presswalze in Drehrichtung formschlüssig verbinden und eine Bewegung des Kettenrades in Axialrichtung der Presswalze zulassen. Außerdem sind Mittel zum Fixieren der axialen Position des Kettenrades in Form einer am Presswalzenstummel befestigten Wellenmutter und einer damit in Eingriff stehenden Außenverzahnung vorgesehen. Die hier offenbarte Ausgestaltung der Presswalzen und Kettenräder ist für antriebsübertragende Kettenräder geeignet, erweist sich jedoch als aufwändig in Kosten und Fertigung. Sie erfüllt jedoch das Erfordernis der axialen Verstellbarkeit der Kettenräder zur Feinjustierung innerhalb des Kettentriebs.

Bei den oben genannten Kettentrieben ist es üblich die Kette von einem Antriebskettenrad an die anzutreibenden Kettenräder der Presswalzen zu führen, wobei zum einen eine Kettenführung mit mehreren Windungen und schlaufenartigen Führungen der Kette erforderlich ist, insbesondere, um ein Verschwenken der Presswalzen zum Öffnen der Presskammer zu ermöglichen. Zum anderen muss ein derartiger Kettentrieb auf Spannung gehalten werden. Um dies zu ermöglichen sind in einem Kettentrieb der oben genannten Art, neben den anzutreibenden Kettenrädern, weitere Kettenräder angeordnet, die innerhalb des Kettentriebs zwecks der oben genannten Kettenführung als Umlenk- oder Führungskettenräder und/oder als Kettenräder zum Spannen des Kettentriebs dienen. Diese weiteren Kettenräder sind freilaufend und werden üblicherweise auf einem Rotationslager geführt, welches auf einem sich vom Rahmen der Rundballenpresse erstreckenden Lagerzapfen oder auf eine Lagerzapfen einer Kettenspannvorrichtung gelagert wird. Derartige freilaufende Kettenräder müssen ebenfalls, einer axialen Feinjustierung unterzogen werden, um präzise im Lauf der Kette zu liegen. Die Feinjustierung der an den Lagerzapfen gelagerten Kettenräder erfolgt üblicherweise mittels Abstandsscheiben, die beidseitig der Stirnseiten des Rotationslagers auf dem Lagerzapfen montiert werden, wie es beispielsweise von den Montagen der Kettentriebe an einer John Deere Rundballenpresse des Typs F441R bekannt ist. Diese Methode der axialen Feinjustierung gestaltet sich oftmals als sehr zeitaufwendig und kann mitunter das mehrmalige Montieren und Demontieren des Kettenrades am Lagerzapfen erfordern. Die Applikation der oben beschriebenen Lösung zum Feinjustieren von angetriebenen Kettenrädern ist für die axiale Feinjustierung eines freilaufenden und auf einem Rotationslager geführten Kettenrades ungeeignet bzw. nicht praktikabel.

Die der Erfindung zugrunde liegende Aufgabe wird darin gesehen, eine Vorrichtung zum axialen Feinjustieren eines freilaufenden Kettenrades eines Kettentriebs einer Rundballenpresse anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Vorrichtung der eingangs genannten Art derart ausgebildet, dass der Lagerzapfen einen ersten Außengewindebereich und einen zweiten Außengewindebereich aufweist, wobei auf den Außengewindebereichen jeweils eine Gewindemutter angeordnet ist mit denen das Rotationslager auf dem Lagerzapfen zwischen den Außengewindebereichen eingespannt ist. Die Anordnung von Gewindemuttern beidseitig axial des Rotationslagers ermöglicht ein präzises axiales Verschieben des Rotationslagers durch einfaches Verdrehen der Gewindemuttern. Eine axiale Feinjustierung des Kettenrades wird unabhängig von einer Stärke (oder Dicke) einer Abstandsscheibe ermöglicht. Eine aufwändige Demontage des Kettenrades bzw. des Rotationslagers vom Lagerzapfen, um beispielsweise eine stärkere oder dünnere Abstandsscheibe zwischen Kettenrad und Rahmen zu platzieren, entfällt.

Zwischen einer Gewindemutter und einer entsprechenden Stirnflächenseite des Rotationslagers kann ein Abstandselement vorgesehen sein. Das Abstandselement wird zwischen der Gewindemutter und der entsprechenden Stirnseite des Rotationslagers platziert, so dass die Gewindemutter nicht direkt mit dem Rotationslager in Kontakt kommt. Dadurch wird eine Rotationsübertragung auf die Gewindemutter und ein sich Lösen der Gewindemutter durch Vibration und rotatorische Bewegungen des Rotationslagers im Betrieb vermieden. Zudem kann durch das Abstandselement, bei gleicher Ausgestaltung der Gewindegänge an Lagerzapfen gleicher Länge, die axiale Grobpositionierung des Kettenrades auf dem Lagerzapfen sehr variabel gestaltet werden, ohne die Position der Gewindemuttern übermäßig verändern zu müssen. Damit kann die Anzahl der Gewindegänge am Lagerzapfen und damit auch der Fertigungsaufwand für die Außengewinde am Lagerzapfen minimiert und ein Justierungsbereich variabel gestaltet werden.

Eine einfache Ausführungsform eines Abstandselements stellt eine Buchse, Hülse oder Scheibe dar, die auf den Lagerzapfen geschoben und zwischen Gewindemutter und Stirnseite des Rotationslagers, einseitig oder auch beidseitig des Rotationslagers eingespannt wird. Eine weitere Ausführungsform sieht den Einsatz einer oder mehrerer Tellerfedern vor, die als Abstandselement dienen können, wobei diese zusätzlich oder an Stelle der oben genannten Abstandselemente angeordnet sein können. Eine oder mehrere Tellerfedern setzen die Gewindemuttern unter eine gewisse Spannung, wodurch eine zusätzliche Verdrehsicherung gegen ein sich Lösen der Gewindemuttern geschaffen wird. Ferner kann so auch eine federvorgespannte axiale Verschiebung des Kettenrades erzielt werden, wenn eine Tellerfeder nur einseitig des Rotationslagers angeordnet wird. In diesem Fall bewirkt ein Verstellen der auf der entgegengesetzten Seite der Tellerfeder angeordneten Gewindemutter eine Kompression oder Ausdehnung der Tellerfeder. Je nach Verstellrichtung der Gewindemutter wird durch eine damit verbundene zunehmende oder abnehmende Federspannung eine axiale Verschiebung des Rotationslagers auf dem Lagerzapfen bewirkt. Die beschriebene axiale Verschiebung des Rotationslagers kann dabei bereits durch Verstellen von nur einer der Gewindemuttern erzielt werden.

Vorzugsweise ist der Durchmesser des ersten Außengewindebereichs größer als der Durchmesser des zweiten Außengewindebereichs ausgebildet ist, wobei sich der zweite Außengewindebereich ausgehend vom freien Ende des Lagerzapfens und der erste Außengewindebereich sich zwischen dem festen Ende und dem Rotationslager erstreckt. Unterschiedliche Durchmesser der Außengewindeabschnitte, ausgehend von einem kleineren Durchmesser am freien Ende des Lagerzapfens, erlauben eine Montage der Vorrichtung durch alleinigen Zugang zum freien Ende des Lagerzapfens. Dadurch ist eine nicht demontierbare Befestigung des festen Endes des Lagerzapfens am Rahmen der Rundballenpresse, beispielsweise durch eine Schweißverbindung oder als Guss- oder Schmiedeteil eines Rahmenteils des Rahmens möglich. Vorzugsweise ist zwischen den Außengewindebereichen des Lagerzapfens ein Lagerzapfenbereich ohne Gewinde vorgesehen ist, auf dem das Rotationslager aufgenommen ist. Damit kann der Lagerzapfenbereich, auf dem das Rotationslager aufgenommen wird, unabhängig von den Gewindebereichen und mit davon abweichenden Größen im Durchmesser gefertigt und an einen optimalen Passsitz für das Rotationslager angepasst werden.

In einem alternativen Ausführungsbeispiel, welches dieselbe technische Wirkung der Vorrichtung entfaltet, ist an Stelle des zweiten Außengewindebereichs am freien Ende des Lagerzapfens und der zugehörigen Gewindemutter ein Innengewindebereich vorgesehen ist, an dem über eine Spannschraube eine Spannplatte befestigt ist, wobei das Rotationslager auf dem Lagerzapfen zwischen dem Außengewindebereich und der Spannplatte eingespannt ist. Damit wird die Spannfunktion der Gewindemutter am zweiten Außengewindebereichs des vorangehenden Beispiels durch die Spannplatte ersetzt. Alle weiteren oben beschriebenen Ausgestaltungen können auch bei diesem Alternativbeispiel zum Einsatz kommen. So kann beispielsweise auch hier zwischen der Gewindemutter und/oder der Spannplatte und einer entsprechenden Stirnflächenseite des Rotationslagers ein Abstandselement vorgesehen sein, wobei das Abstandselement entsprechend auch als Buchse, Hülse, Scheibe oder Tellerfeder ausgebildet sein kann.

Die oben beschriebene Vorrichtung eignet sich besonders für den Einsatz in einem Kettentrieb zum Antreiben von Presswalzen oder Pressriemen einer Rundballenpresse zum Pressen von Erntegut. Die Vorrichtung kann dabei an einem oder auch an mehreren Kettenrädern des Kettentriebs zum Einsatz kommen.

Der oben genannte Kettentrieb ist in vielerlei Arten von landwirtschaftlichen Maschinen einsetzbar, in denen Rollen, Walzen, Trommeln oder andere Rotationskörper angetrieben werden müssen. Er eignet sich jedoch besonders für den Einsatz in einer Rundballenpresse mit einem Rahmen, einem Pressraum und am Rahmen angeordnete und den Pressraum umgebende Presswalzen oder Pressriemen zum Pressen von Erntegut, wobei der Kettentrieb am Rahmen und/oder einer Seitenwand der Rundballenpresse zum Antreiben der Presswalzen oder des Pressriemens angeordnet ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Seitenansicht einer Rundballenpresse mit einem Kettentrieb zum Antreiben von Presswalzen
Fig. 2 eine schematische Querschnittsansicht einer Vorrichtung zum Justieren eines Kettenrades des Kettentriebs aus Figur 1 und
Fig. 3 eine schematische Querschnittsansicht einer alternativen Form einer Vorrichtung zum Justieren eines Kettenrades des Kettentriebs aus Figur 1.
Fig. 4 eine schematische Querschnittsansicht einer weiteren alternativen Form einer Vorrichtung zum Justieren eines Kettenrades des Kettentriebs aus Figur 1.
Fig. 5 eine schematische Querschnittsansicht einer weiteren alternativen Form einer Vorrichtung zum Justieren eines Kettenrades des Kettentriebs aus Figur 1.

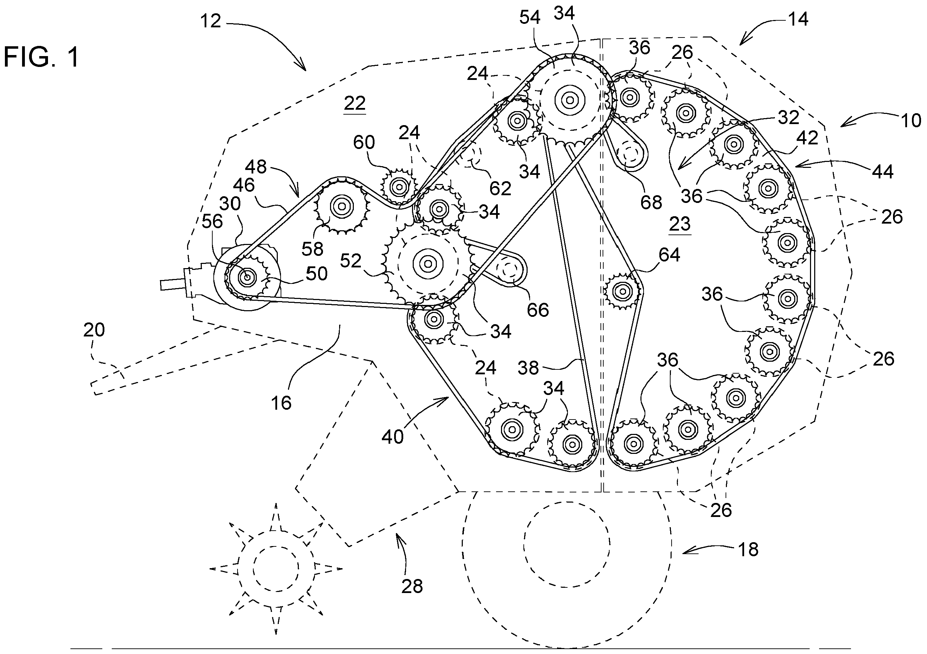

Eine in Figur 1 dargestellte Rundballenpresse 10 weist einen vorderen Teil 12 und einen rückwärtigen Teil 14 auf.

Die Rundballenpresse 10 umfasst ferner einen Rahmen 16, ein Fahrwerk 18, eine Deichsel 20, Seitenwände 22 am vorderen Teil 12, Seitenwände 23 am hinteren Teil 14, Presswalzen 24 am vorderen Teil 12, Presswalzen 26 am hinteren Teil 14, einen Zuführzusammenbau 28 zur Aufnahme eines Ernteguts und eine Antriebsvorrichtung 30.

Der Rahmen 16 besteht aus Streben und dergleichen, die die vorgenannten Komponenten zusammenhalten und tragen und somit den vorderen Teil 12 zu einer Einheit formen.

Das Fahrwerk 18 setzt sich nicht näher bezeichnet aus einer Achse und daran angebrachten Rädern zusammen, die sich im unteren rückwärtigen Bereich des vorderen Teils 12 befinden und die gesamte Rundballenpresse 10 auf dem Boden fahrbar abstützen.

Die Deichsel 20 dient dem Anschluss der Rundballenpresse 10 an einem Zugfahrzeug, z. B. an einem Ackerschlepper, und ist fest mit dem Rahmen 16 verbunden.

Die Seitenwände 22, 23 sind ebenfalls fest mit dem Rahmen 16 verbunden und schließen eine Presskammer 32 stirnseitig ab. Die Seitenwände 22, 23 nehmen hierzu einen Abstand zueinander ein und nehmen die Presswalzen 24 und 26 beweglich auf. Im oberen rückwärtigen Bereich des vorderen Teils 12 ist ein Lager (nicht gezeigt) vorgesehen, das dem vertikal schwenkbaren Anschluss des rückwärtigen Teils 14 dient. Die Seitenwände 22, 23 sind durch nicht näher bezeichnete aber hinlänglich bekannte Querstreben miteinander verbunden.

Die Presswalzen 24 und 26 sind in bekannter Weise aus einem Blechmantel und einer Welle oder Wellenstummeln zusammengesetzt. Die Mittelpunkte der Presswalzen 24 und 26, d. h. deren Drehachsen liegen im Wesentlichen auf einem Teil eines Kreises, der die Presskammer 32 umgibt. Auf wenigstens einer Seite der Rundballenpresse 10 sind auf der Außenseite der Seitenwände 22, 23 am vorderen Teil 12 auf den Presswalzen 24 Kettenräder 34 und am hinteren Teil 14 auf den Presswalzen 26 Kettenräder 36 vorgesehen. Die Kettenräder 34 der Presswalzen 24 sind von einer Antriebskette 38 eines ersten Kettentriebs 40 umgeben. Die Kettenräder 36 der Presswalzen 26 sind von einer Antriebskette 42 eines zweiten Kettentriebs 44 umgeben. Eine weitere Antriebskette 46 eines dritten Kettentriebs 48 dient zum Antreiben des ersten und zweiten Kettentriebs 40 und 44. Der dritte Kettentrieb 48 wird von einem Hauptantriebskettenrad 50, welches mit der Antriebsvorrichtung 30 verbunden ist angetrieben. Der dritte Kettentrieb 48 treibt ein erstes Antriebskettenrad 52 an, welches zum Antreiben des ersten Kettentriebs 40 dient. Der dritte Kettentrieb 48 treibt ferner auch ein zweites Antriebskettenrad 54 an, welches zum Antreiben des zweiten Kettentriebs 44 dient. Das erste und zweite Antriebskettenrad 52 und 54 sind jeweils doppelt verzahnt, wobei eine erste Verzahnung des ersten Antriebskettenrad 52 und eine erste Verzahnung des zweiten Antriebskettenrad 54 mit dem dritten Kettentrieb 48 in Verbindung stehen. Eine zweite Verzahnung des ersten Antriebskettenrades 52 steht mit dem ersten Kettentrieb 40 in Verbindung und treibt diesen an. Eine zweite Verzahnung des zweiten Antriebskettenrades 54 steht mit dem zweiten Kettentrieb 44 in Verbindung und treibt diesen an.

Die Antriebsvorrichtung 28 wird auf nicht gezeigte Weise von dem Zugfahrzeug, z. B. über eine Gelenkwelle, gespeist und enthält im rückwärtigen Bereich der Deichsel 20 eine quer verlaufende Welle 56. Von der Welle 56 geht das Hauptantriebskettenrad 50 aus, welches den dritten Kettentrieb 48 antreibt.

Die Kettentriebe 40, 44 und 48 werden über zusätzliche Kettenräder 58, 60, 62, 64 und mittels nicht näher bezeichneter Spannvorrichtungen gespannt. Ferner sind für den ersten Kettentrieb 40 ein Kettenrad 66 und für den zweiten Kettentrieb 44 ein Kettenrad 68 zur Führung bzw. Umlenkung der jeweiligen Antriebsketten 38, 42 vorgesehen.

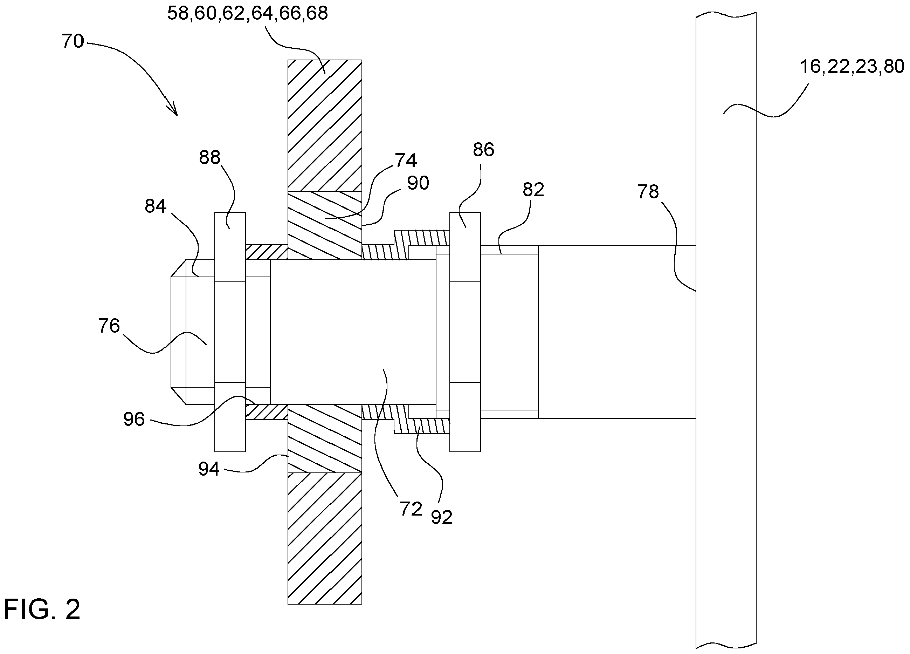

In den Figuren 2 bis 5 sind jeweils Vorrichtungen 70 zum Justieren der zusätzlichen Kettenräder 58, 60, 62, 64, 66 und 68 gezeigt, wobei die Kettenräder 58, 60, 62, 64, 66 und 68 jeweils auf einem Lagerzapfen 72 einer derartigen Vorrichtung 70 angeordnet sind. Neben dem Lagerzapfen 72 und einem der zu justierenden Kettenräder 58, 60, 62, 64, 66 und 68, umfasst die Vorrichtung 70 ein auf dem Lagerzapfen 72 angeordnetes Rotationslager 74 und das auf dem Rotationslager 74 geführte Kettenrad 58, 60, 62, 64, 66 und 68. Der Lagerzapfen 72 umfasst ein freies Ende 76 und ein festes Ende 78. Letzteres ist an den Rahmen 16, an die Seitenwände 22, 23 oder an einen Spannarm 80 einer Spannvorrichtung (nicht näher bezeichnet) befestigt. Die Befestigung des Lagerzapfens kann auf demontierbare (lösbare) Weise in beliebiger Form oder auf nicht lösbare Weise, beispielsweise durch Schweißen oder durch eine im Gieß- oder Schmiedeverfahren des Spannarms 80 hergestellte Verbindung erfolgen. Der Lagerzapfen 72 weist ferner einen ersten Außengewindebereich 82 und einen zweiten Außengewindebereich 84 auf, wobei der Durchmesser des ersten Außengewindebereichs (82) größer als der Durchmesser des zweiten Außengewindebereichs (84) ausgebildet ist. Auf den Außengewindebereich 82 ist eine erste Gewindemutter 86 und auf den zweiten Außengewindebereich 84 ist eine zweite Gewindemutter 88 aufgeschraubt. Zwischen der ersten Gewindemutter 86 und einer ihr zugewandten Stirnfläche 90 des Rotationslagers 74 ist ein erstes Abstandselement 92 in Form einer Abstands- oder Distanzhülse bzw. -buchse vorgesehen. Zwischen der zweiten Gewindemutter 88 und einer ihr zugewandten Stirnfläche 94 des Rotationslagers 74 ist ein zweites Abstandselement 96 ebenfalls in Form einer Abstands- oder Distanzhülse bzw. - buchse vorgesehen. Die Abstandselemente 92 und 96 können hier auch als Distanz- bzw. Unterlegscheiben ausgebildet sein.

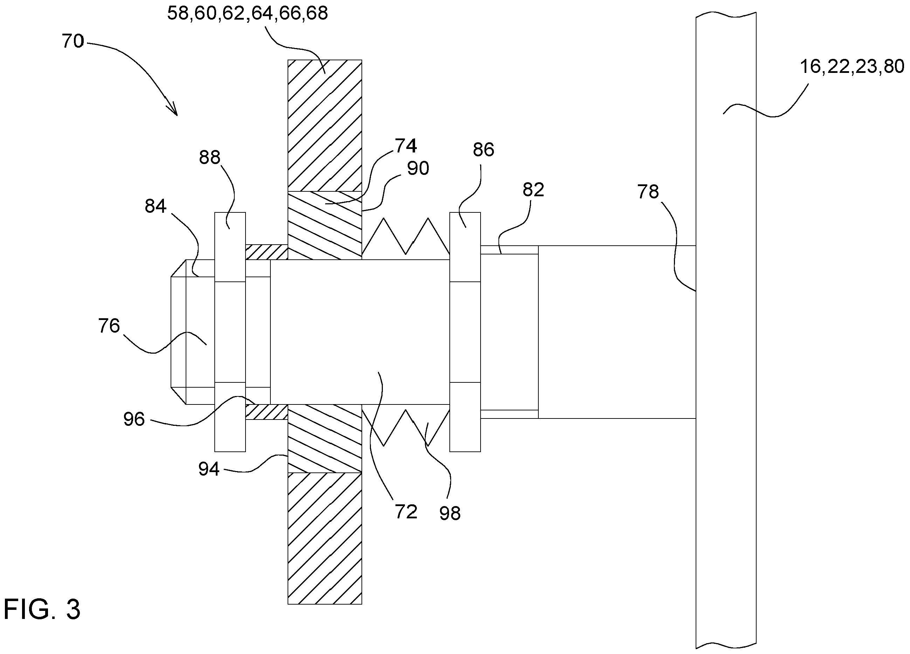

In einer alternativen Ausführungsform, wie in Figur 3 gezeigt, ist das erste Abstandselement 92 durch ein Tellerfederpaar 98 ersetzt. Hierbei können eine oder mehrere Tellerfedern 98 hintereinander angeordnet sein. Gleichfalls könnte auch das zweite Abstandselement 96 durch eine oder mehrere Tellerfedern 98 ersetz werden.

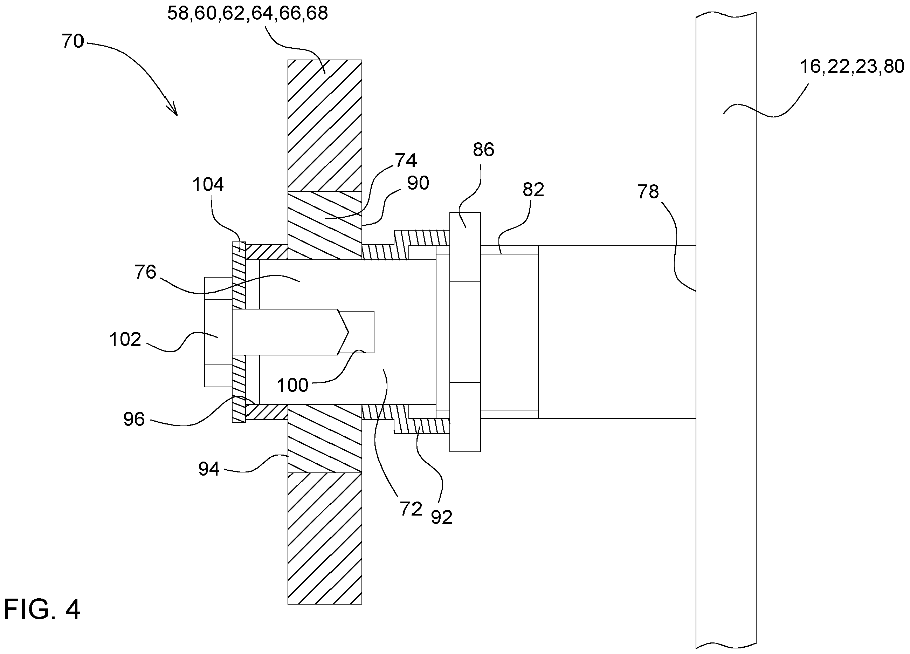

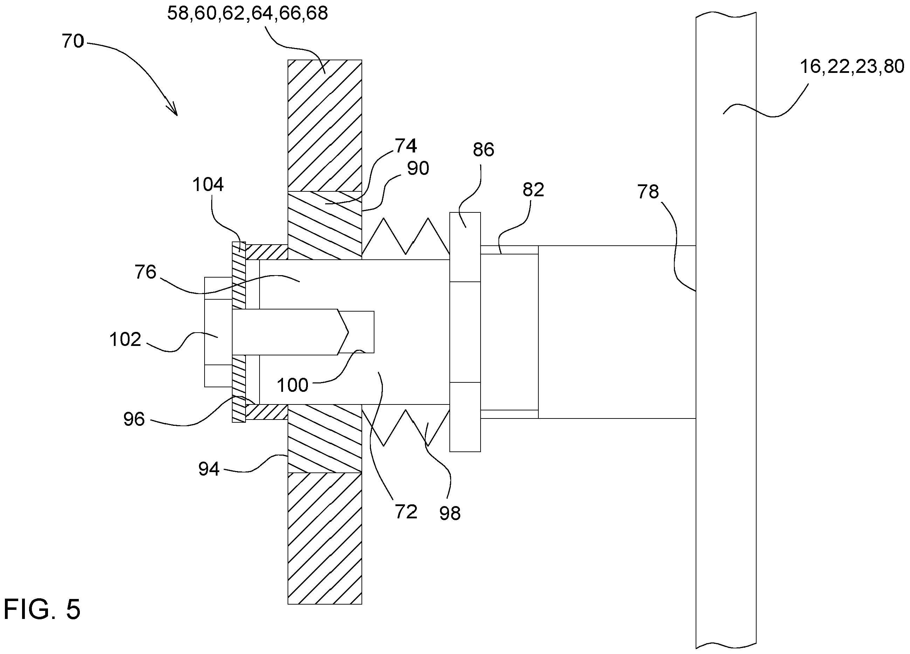

Weitere alternative Ausführungsformen sind in Figur 4 oder Figur 5 gezeigt. Hier sind der zweite Außengewindebereich 84 und die zweite Gewindemutter 88 aus den Figuren 2 und 3 durch einen am freien Ende 76 des Lagerzapfens 72 vorgesehenen Innengewindebereich 100 mit einer darin eingefassten Spannschraube 102 und einer Spannplatte 104 ersetzt. Das Innengewinde am Innengewindebereich 100 im Zusammenspiel mit der Spannschraube 102 und der Spannplatte 104 entfalten dabei dieselbe technische Wirkung wie die zuvor beschriebene zweite Gewindemutter 88 im Zusammenspiel mit dem zweiten Außengewindebereich 84, wobei das Rotationslager 74 auf dem Lagerzapfen 72 zwischen dem ersten Außengewindebereich 82 und der Spannplatte 104 eingespannt ist. Damit wird die Spannfunktion der zweiten Gewindemutter 88 am zweiten Außengewindebereich 84 der vorangehenden Beispiele durch die Spannplatte 104 ersetzt. Alle weiteren oben beschriebenen Ausgestaltungen können auch bei diesem Alternativbeispiel zum Einsatz kommen. So kann beispielsweise, wie in den Figuren 4 und 5 gezeigt, auch hier zwischen der ersten Gewindemutter 86 und/oder der Spannplatte 104 und der entsprechenden Stirnfläche 90, 94 des Rotationslagers 74 ein Abstandselement 92, 96, 98 vorgesehen sein, wobei das Abstandselement 92, 96, 98 entsprechend auch als Buchse, Hülse, Scheibe oder Tellerfeder ausgebildet sein kann.

Durch Verdrehen der ersten und zweiten Gewindemuttern 86, 88 bzw. der ersten Gewindemutter 86 und der Spannschraube 104 (im Falle des Ausführungsbeispiels in Figur 4), kann die Position des Rotationslagers 74 axial zum Lagerzapfen 72 verändert und eine Feinjustierung des Rotationslagers und damit der axialen Position des Kettenrades zum Lagerzapfen 74 vorgenommen werden. Sollten Tellerfedern 98 als Abstandselemente vorgesehen sein, so kann aufgrund der durch die Tellerfeder 98 aufgebrachten Vorspannung eine axiale Verschiebung des Rotationslagers 74 schon durch Verstellen von nur einer Gewindemutter 86, 88 bzw. durch Verstellen von nur der Spannschraube 104 (im Falle des Ausführungsbeispiels in Figur 5) erzielt werden.

## Patentansprüche

1. Vorrichtung (70) zum Justieren eines Kettenrades (58, 60, 62, 64, 66, 68) eines Kettentriebs (40, 44, 48), mit einem Lagerzapfen (72), der ein freies Ende (76) und ein festes Ende (78) umfasst, einem auf dem Lagerzapfen (72) angeordneten Rotationslager (74) und einem auf dem Rotationslager (74) geführten Kettenrad (58, 60, 62, 64, 66, 68), **dadurch gekennzeichnet, dass** der Lagerzapfen (72) einen ersten Außengewindebereich (82) und einen zweiten Außengewindebereich (84) aufweist, wobei auf den Außengewindebereichen (82, 84) jeweils eine Gewindemutter (86, 88) angeordnet ist, mittels denen das Rotationslager (74) auf dem Lagerzapfen (72) zwischen den Außengewindebereichen (82, 84) eingespannt ist.

2. Vorrichtung (70) nach Patentanspruch 1, wobei zwischen wenigstens einer Gewindemutter (86, 88) und wenigstens einer entsprechenden Stirnflächenseite (90, 94) des Rotationslagers (74) ein Abstandselement (92, 96, 98) vorgesehen ist.

3. Vorrichtung (70) nach Patentanspruch 2, wobei das Abstandselement (92, 96, 98) als Buchse, Hülse, Scheibe oder Tellerfeder ausgebildet ist.

4. Vorrichtung (70) nach einem der Patentansprüche 1 bis 3, **dadurch gekennzeichnet, dass** der Durchmesser des ersten Außengewindebereichs (82) größer als der Durchmesser des zweiten Außengewindebereichs (84) ausgebildet ist, wobei sich der zweite Außengewindebereich (84) ausgehend vom freien Ende (76) des Lagerzapfens (72) und sich der erste Außengewindebereich (82) zwischen dem festen Ende (78) und dem Rotationslager (74) erstreckt.

5. Vorrichtung (70) nach Patentanspruch 1, wobei an Stelle des zweiten Außengewindebereichs (84) und der zugehörigen Gewindemutter (88) ein Innengewindebereich (100) vorgesehen ist, an dem über eine Spannschraube (102) eine Spannplatte (104) befestigt ist, wobei das Rotationslager (74) auf dem Lagerzapfen (72) zwischen dem ersten Außengewindebereich (82) und der Spannplatte (104) eingespannt ist.

6. Vorrichtung (70) nach Patentanspruch 5, wobei zwischen der Gewindemutter (86) und/oder der Spannplatte (104) und einer entsprechenden Stirnflächenseite (90, 94) des Rotationslagers (74) ein Abstandselement (92, 96, 98) vorgesehen ist.

7. Vorrichtung (70) nach Patentanspruch 5 oder 6, wobei das Abstandselement (92, 96, 98) als Buchse, Hülse, Scheibe oder Tellerfeder ausgebildet ist.

8. Kettentrieb (40, 44, 48) zum Antreiben von Presswalzen (24, 26) oder Pressriemen einer Rundballenpresse (10) zum Pressen von Erntegut, mit wenigstens einer Vorrichtung (70) nach einem der vorrangehenden Patentansprüche.

9. Rundballenpresse (10) mit einem Rahmen (16), einem Pressraum (32) und am Rahmen (16) angeordnete und den Pressraum (32) umgebende Presswalzen (24, 26) oder Pressriemen zum Pressen von Erntegut und einem am Rahmen (16) angeordneter Kettentrieb (40, 44, 48) nach Anspruch 8 zum Antreiben der Presswalzen (24, 26) oder des Pressriemens.
